# EUROPEAN PATENT APPLICATION

(11) **EP 4 745 995 A1**
(43) Date of publication of application: **20.05.2026**
(21) Application number: 25215957.9
(22) Date of filing: 14.11.2025
(51) Int. Cl.: G21D 1/00, B66F 9/00

(54) **METHOD FOR DISMANTLING D2O TANK OF HEAVY WATER REACTOR AND DISMANTLING APPARATUS**

(30) Priority: 15.11.2024 KR 20240162911
(71) Applicant: Doosan Enerbility Co., Ltd., Seongsan-gu Changwon-si, Gyeongsangnam-do 51711 (KR)
(72) Inventor: Park, Kwang Soo, 02225 Seoul (KR); Kim, Chang Kyu, 51471 Changwon-si, Gyeongsangnam-do (KR); Kim, Hae Woong, 51319 Changwon-si, Gyeongsangnam-do (KR); Pak, Dong Hun, 44617 Ulsan (KR); Lim, Chung Sik, 51431 Changwon-si, Gyeongsangnam-do (KR); Lim, Tae Seob, 06912 Seoul (KR)
(74) Representative: BCKIP Part mbB

(57) **Abstract**

Disclosed is a method for dismantling a D20 tank of a heavy water reactor installed on an inner wall of a containment building and surrounded by a concrete structure, the method including cutting and opening a front surface of the concrete structure so as to dismantle the D20 tank, descending the D20 Tank by using an dedicated dismantling apparatus, and taking the D20 tank out of the containment building by using a crane, and a dismantling apparatus.

## Description

The present application claims priority to Korea Patent Application No. 10-2024-0162911, filed November 15, 2024.

### FIELD

The present disclosure relates to a method for dismantling a D2O tank of a heavy water reactor and a dismantling apparatus, more particularly, a method for dismantling a D2O tank of a heavy water reactor and a dismantling apparatus for safely dismantling the D2O tank that is installed on an upper side of an inner wall of a containment building and is surrounded by a concrete structure while overcoming a spatial constraints and minimizing radiation exposure to workers.

### BACKGROUND

In general, when operation of a reactor facility, such as a nuclear power plant, is terminated , decommissioning measures are carried out. Such discard measures are typically performed in the order of system decontamination, safe storage of nuclear fuel, and dismantling and removal. In the process of dismantling and removal, piping and machinery within the facility are first dismantled, after which the building itself is dismantled. In this process, it is important to ensure that radioactive materials are not be released to the outside environment, and to minimize radiation exposure to workers for dismantling and removal.

Globally, a nuclear power plant of a heavy water reactor type, such as the Wolsong Unit 1 nuclear power plant, has never been dismantled. In particular, a nuclear power plant of a heavy water reactor type is different from a nuclear power plant of a light water reactor type in that the D2O (heavy water) tank is installed on an upper side of an inner wall of a containment building and is surrounded by a concrete structure.

As such, as the D2O tank is installed on the inner wall on one side of the containment building and is positioned inside the concrete structure, accessing, dismantling and handling of the D2O tank are difficult due to spatial constraints. Further, because the D2O tank is installed an elevated position, a height of a conventional crane is lower than the D2O tank, making it difficult to lift and remove the D2O tank using the conventional crane.

Therefore, there is a need for a method and an apparatus for safely dismantling the D2O tank while overcoming the difficulties presented by the surrounding environment.

### SUMMARY

An object of the present disclosure is to provide a method for dismantling the D2O tank of a heavy water reactor and a dismantling apparatus capable of safely dismantling the D2O tank that is installed on an upper side of an inner wall of a containment building and is surrounded by the concrete structure while overcoming the spatial constraints and minimizing radiation exposure to workers.

The technical problem to be achieved by the present disclosure is not limited to the above-mentioned technical problem, and other technical problems that are not mentioned will be clearly understood by ordinary-skilled persons in the art to which the present disclosure pertains from the following description.

The present disclosure provides a method for dismantling the D2O tank of a heavy water reactor and a dismantling apparatus capable of cutting and opening a front surface of the concreate structure, lowing the D2O tank using a dedicated dismantling apparatus and taking the D2O tank out of the containment building using a crane so as to safely dismantle the D2O tank installed on an inner wall of a containment building and surrounded by the concrete structure.

One embodiment is a method for dismantling a D2O tank of a heavy water reactor installed on an inner wall of a containment building and surrounded by a concrete structure, including: an opening step of cutting a portion of the concrete structure surrounding the D2O tank to create an opening; a cutting step of cutting the D2O tank through the opening; a lifting step of lifting the D2O tank by using a first hydraulic device; a transferring step of transferring the first hydraulic device. while lifting the D2O tank, toward a second hydraulic device; and a descending step of lowering the first hydraulic device, while lifting the D2O tank, by using the second hydraulic device.

The method for dismantling a D2O tank may further include: a removing step of taking the D2O tank out of a containment building by using a crane after the descending step.

According to an embodiment, in the opening step, a scaffold and a cutting apparatus may be installed around the D2O tank and the portion of the concrete structure is cut perpendicularly by using the cutting apparatus.

According to an embodiment, the cutting apparatus may be a wire saw device.

According to an embodiment, in the cutting step, a support of the D2O tank connected to the concrete structure may be cut.

According to an embodiment, in the lifting step, the D2O tank may be lifted by at least 50mm by using the first hydraulic device.

According to an embodiment, in the transferring step, the first hydraulic device lifting the D2O tank may be transferred along a rail to a position above the second hydraulic device.

According to an embodiment, the method for dismantling a D2O tank may further include an installing step, performed before the cutting step, of installing the second hydraulic device, the rail, and the first hydraulic device.

According to an embodiment, in the opening step, the scaffold and the cutting apparatus installed around the D2O tank may be removed before the installing step.

According to an embodiment, in the installing step, the second hydraulic device may be installed, the rail may be installed to connect the concrete structure and the second hydraulic device to each other, and then, the first hydraulic device may be installed on the rail.

According to an embodiment, the method for dismantling a D2O tank may further include: a detaching step of detaching the rail after the transferring step, and wherein the descending step is performed after the detaching step.

Another embodiment is a dismantling apparatus for dismantling a D2O tank of a heavy water reactor installed on an inner wall of a containment building and surrounded by a concrete structure, including: a first hydraulic device configured to lift the D2O tank; a second hydraulic device spaced apart from the D2O tank and configured to lower the D2O tank; and a transfer device configured to transfer the first hydraulic device, while lifting the D2O tank, toward the second hydraulic device, wherein the dismantling apparatus is installed in a state in which a portion of the concrete structure surrounding the D2O tank has been cut and open.

According to an embodiment, the transfer device may include a rail configured to connect the concrete structure and the second hydraulic device to each other.

According to an embodiment, the first hydraulic device may comprise a driving device configured to move the first hydraulic device along the rail.

According to an embodiment, the rail may be detachably installed.

According to an embodiment, the rail may be detached after the first hydraulic device, while lifting the D2O tank, is transferred to a position above the second hydraulic device, and the second hydraulic device may lower the first hydraulic device together with the D2O tank.

According to an embodiment, the second hydraulic device may include a plate having a flat surface on which the rail is installed, and a hydraulic portion disposed below the plate and configured to adjust a height of the plate.

According to an embodiment, the rail may be installed in a groove formed on the plate of the second hydraulic device.

According to the present disclosure, it is possible to safely dismantle the D2O tank of a heavy water reactor while overcoming the spatial constraints and minimizing exposure to radiation of a worker by cutting and opening a front surface of the concrete structure surrounding the D2O tank, descending the D2O tank using an exclusive dismantling apparatus and taking the D2O tank out of the containment building using a crane.

The effects of the present disclosure are not limited to the above-described effects and it should be understood that the present disclosure includes all other effects which may be derived from the following description of the embodiments of the present disclosure.

### BRIEF DESCRIPTION OF THE DRAWINGS

FIG. 1 is a flowchart illustrating a method for dismantling a D2O tank of a heavy water reactor according to an embodiment of the present disclosure.
FIG. 2 is a schematic view illustrating a state before a front part of a concrete structure is open.
FIG. 3 is a schematic view illustrating a state in which a wire saw device is installed so as to open a front part of a concrete structure.
FIG. 4 is a schematic view illustrating a state in which a dismantling apparatus for a D2O tank of a heavy water reactor according to an embodiment of the present disclosure is installed after a front part of a concrete structure is open.
FIG. 5 is a schematic view illustrating a state in which a support of a D2O tank is cut and a D2O tank is lifted by a first hydraulic device.
FIGS. 6A and 6B are schematic views illustrating a state in which a first hydraulic device lifting a D2O tank is transferred to an upper side of a second hydraulic device.
FIG. 7 is a cross-sectional view taken along A-A line of FIG. 6B.
FIGS. 8A and 8B are schematic views illustrating a state in which a D2O tank is descended by a second hydraulic device after a rail is detached.

### DETAILED DESCRIPTION

Hereinafter, a preferred embodiment of a method for dismantling a D2O tank of a heavy water reactor and a dismantling apparatus according to the present disclosure will be described with reference to the accompanying drawings.

Further, terms described below are defined in consideration of the functions of one or more exemplary embodiments, and may have different meanings according to the intention of a user or operator or the convention. Furthermore, the exemplary embodiments described below are not intended to limit the scope of the present disclosure but merely to exemplify configurational elements defined in the claims.

In order to clearly illustrate the present disclosure, parts not related to the description are omitted, and similar parts are denoted by like reference characters throughout the specification. Throughout the specification, when a certain portion "includes" or "comprises" a certain component, this indicates that other components are not excluded and may be further included unless otherwise noted.

In the present specification, regarding an element represented as a "unit" or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another component.

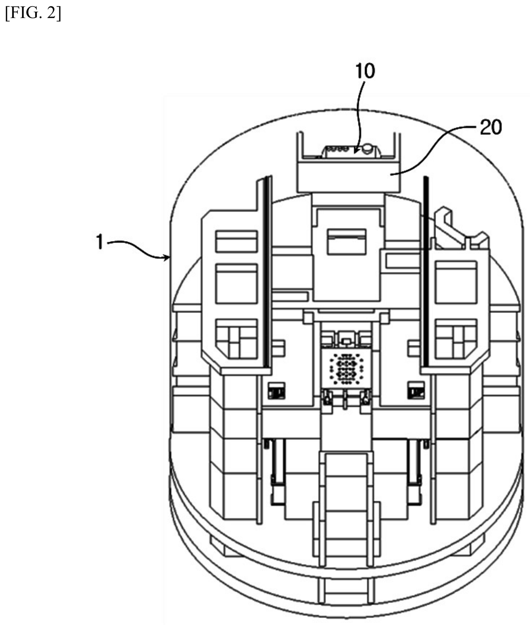

Referring to FIG. 2, in a containment building 1 of a nuclear power plant to which the method according to the present invention is applied, a D2O tank 10 of a heavy water reactor is installed on an inner wall of a containment building 1 and surrounded by a concrete structure 20 . The present disclosure provides a method for dismantling the D2O tank 10 and a dismantling apparatus for safely dismantling the D2O tank 10 while overcoming the spatial constraints of the D2O tank 10 and minimizing radiation exposure to workers.

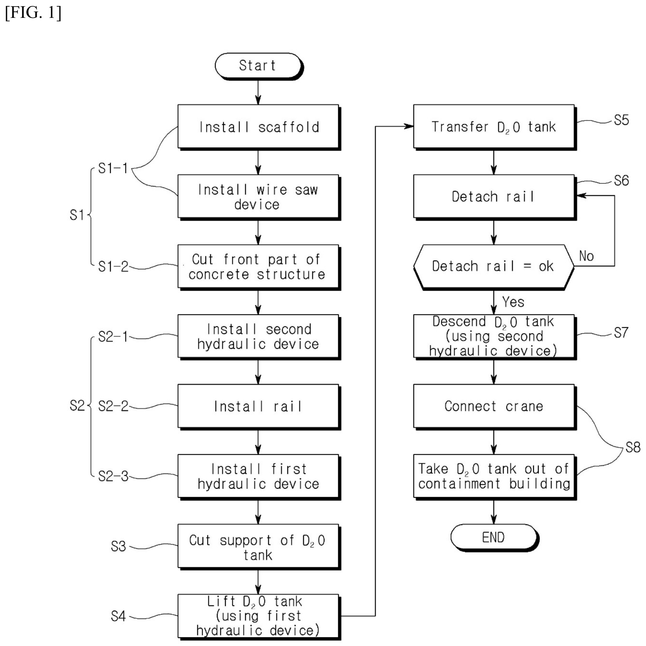

As illustrated in FIG. 1, the method for dismantling the D2O tank according to an embodiment of the present disclosure may include an opening step (S1), an installing step (S2), a cutting step (S3), a lifting step (S4), a transferring step (S5), a detaching step (S6), a descending step (S7), and a removing step (S8).

The opening step (S1) is a step of cutting and opening a portion of the concrete structure 20 that surrounds the D2O tank 10. More specifically, in the opening step (S1), a scaffold and a cutting apparatus are installed around the D2O tank 10 (S1-1), and then a portion of the concrete structure is cut using the cutting apparatus (S1-2). The portion of the concrete structure may be cut such that the cut surface or the cut opening is perpendicular to a horizontal direction in the containment building.

Since the concrete structure 20 is fixed to an inner wall of the containment building 1, it is sufficient to cut only a front portion thereof to create an opening in the concrete structure though which the D2O tank 10 can be pulled out.

The cutting apparatus described in the present disclosure is a powered machine or tool that cuts an object into two or more pieces. For example, the cutting apparatus may be a wire saw device 30, but is not limited thereto. By using the wire saw device 30, a worker may cut the concrete structure 20 from a safe distance by remote operation, thereby minimizing radiation exposure to radiation.

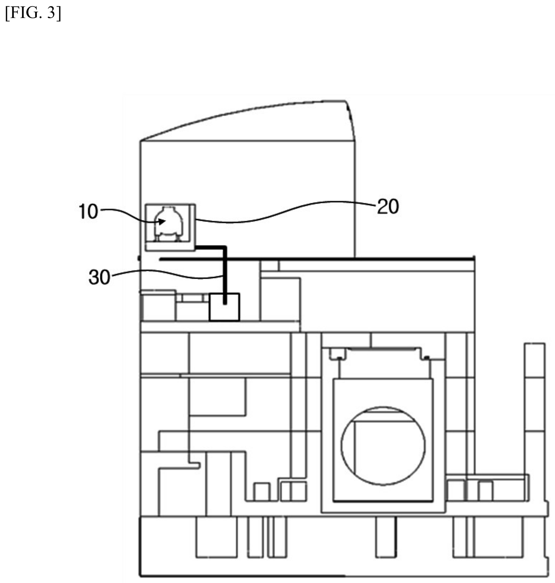

A scaffold for the work is installed around the D2O tank 10, and the wire saw device 30 is installed (i.e., set up) to cut a front portion of the concrete structure 20. FIG. 3 illustrates a state in which the wire saw device 30 is installed to open the front portion of the concrete structure. Once the installation is completed, cutting is performed along a predetermined cutting line of the concrete structure 20, and the cut-off concrete piece is lowered to the ground and stored.

After the opening is made, part of the D2O tank 10 is cut through the opened space, and a dismantling apparatus of the D2O tank 10 is installed to handle and descend (i.e., lower) the D2O tank to the ground. When installing the dismantling apparatus of the D2O tank 10, the scaffold and the wire saw device 30 which have been installed may be removed.

The dismantling apparatus is installed after completion of the opening step (S1), that is, after a portion of the concrete structure 20 surrounding the D2O tank 10 has been cut and opened.

According to an embodiment, the dismantling apparatus may include a first hydraulic device 100 configured to lift the D2O tank 10, a second hydraulic device 200 disposed at a position horizontally spaced apart from the D2O tank 10 and configured to descend (i.e., lower) the D2O tank 10, and a transfer device configured to transfer the first hydraulic device 100 lifting the D2O tank 10 toward the second hydraulic device 200.

The first hydraulic device 100 and the second hydraulic device 200 may be an apparatus that uses pressurized fluid, e.g., oil, to move or press heavy object. The first hydraulic device 100 and the second hydraulic device 200 may include at least one of a reservoir, a pump, a piston and cylinder and a valve.

In the present embodiment, the transfer device may be a physical structure or assembly on which a tool can be mounted and transferred in a certain direction. For example, the transfer device may include a rail 300 that connects the concrete structure 20 to the second hydraulic device 200 to each other. However, other types of transfer devices may also be employed.

The second hydraulic device 200 may include a plate 220 having a flat surface on which the rail 300 can be mounted, and a hydraulic portion 240 disposed below the plate 220 and configured to allow adjustment of the plate height. When the rail 300 is installed, the concrete structure 20 and the plate 220 are positioned in parallel to each other so that the rail 300 can be aligned in a straight line.

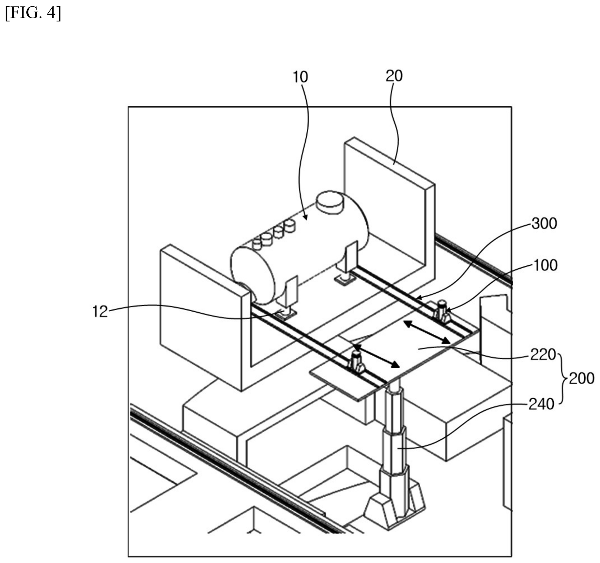

As described above, after completion of the opening step (S1), the installing step (S2) of the dismantling apparatus is performed. In the installing step (S2), the second hydraulic device 200 is installed first (S2-1) and the rail 300 is then installed to connect the concrete structure 20 with the second hydraulic device 200 (S2-2), and then, the first hydraulic device 100 is installed on the rail 300 (S2-3). FIG. 4 illustrates a state in which the dismantling apparatus for the D2O tank 10 is installed after opening the front portion of the concrete structure.

After the dismantling apparatus is installed, the cutting step (S3) of cutting the D2O tank 10 is performed. In the cutting step (S3), a support 12 of the D2O tank 10 connected to the concrete structure 20 may be cut. The cutting step (S3) may be performed using a wire saw or a hand-held band saw.

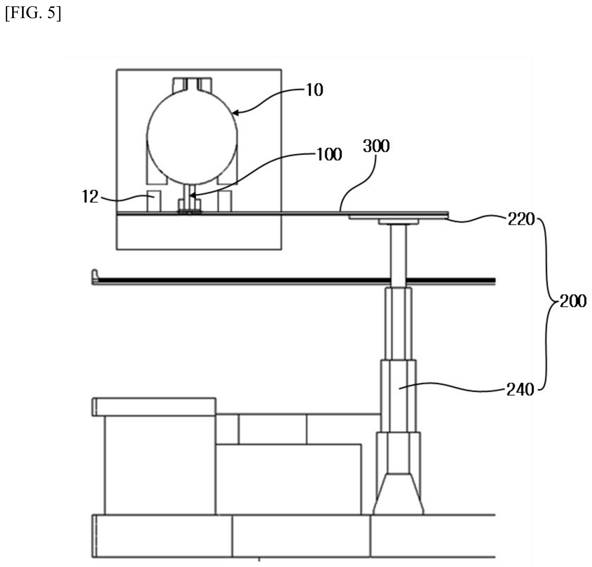

After the support 12 of the D2O tank 10 is cut, the lifting step (S4) of lifting the D2O tank 10 by using the first hydraulic device 100 is performed. In the lifting step (S4), it is preferable that the D2O tank 10 is lifted at least by 50mm by using the first hydraulic device 100 positioned below the D2O tank 10. FIG. 5 illustrates a state in which the D2O tank 10 is lifted by the first hydraulic device 100 after the support 12 of the D2O tank 10 has been cut.

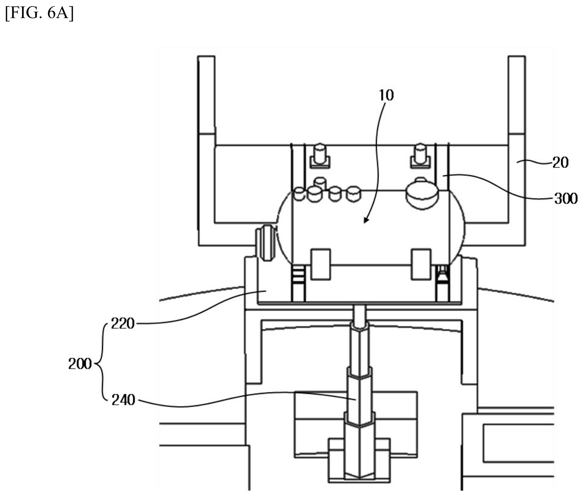

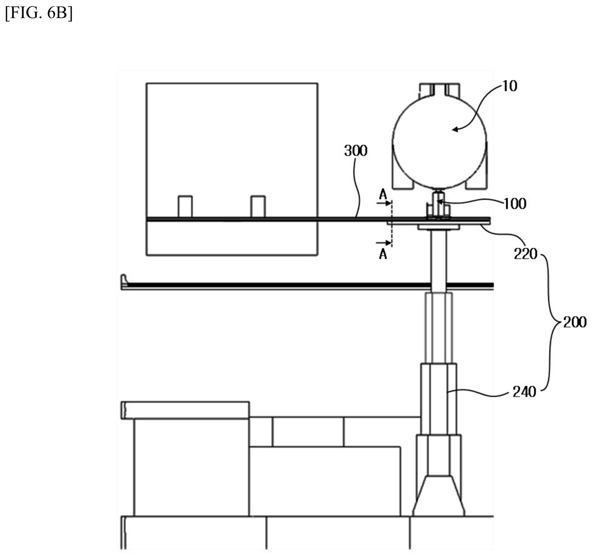

Thereafter, the transferring step (S5) of moving the first hydraulic device 100, which is lifting the D2O tank 10 toward the second hydraulic device 200 , is performed. In the transferring step (S5), the first hydraulic device 100 lifting the D2O tank 10 is transferred to a position above the second hydraulic device 200 along the rail 300. To this end, the first hydraulic device 100 may be provided with a driving device, such as an actuator, configured to move the first hydraulic device 100 along the rail 300. FIGS. 6A and 6B illustrate a state in which the first hydraulic device 100, while lifting the D2O tank 10, is transferred to a position above the second hydraulic device 200.

After the transferring step (S5), the detaching step (S6) of detaching the rail 300 is performed. Specifically, after the first hydraulic device 100 has been transferred to the position above the second hydraulic device 200, the rail 300 is detached.

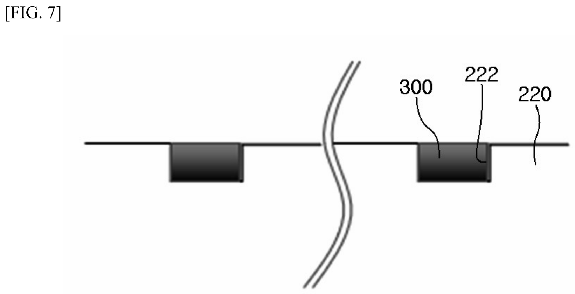

To this end, the rail 300 may be detachably installed. According to an embodiment, as shown in FIG. 7, the rail 300 may be installed in a groove 222 formed on the plate 220 of the second hydraulic device 200. Thus, after the transfer of the first hydraulic device 100 is completed, the rail 300 may be removed by withdrawing a fixing pin or other fastener which fixes the rail 300 and pulling the rail 300 out from the groove 222.

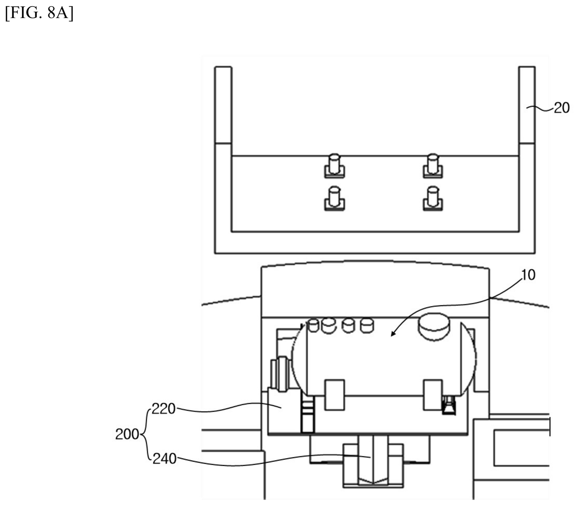

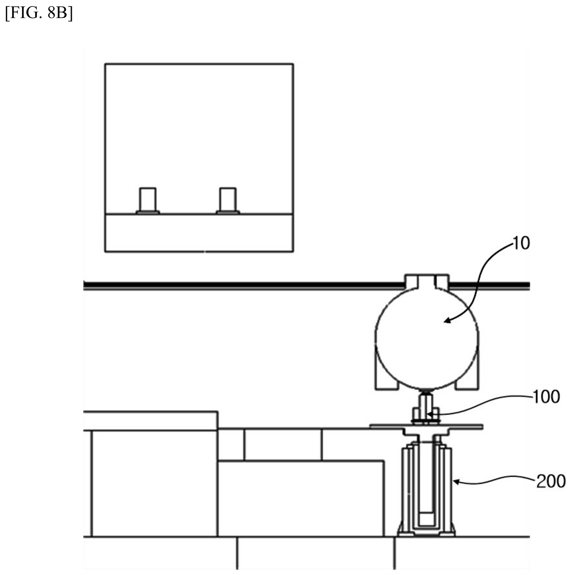

After the detaching step (S6) is completed, the descending step (S7) of lowering the first hydraulic device 100, which is lifting the D2O tank 10, by using the second hydraulic device 200 may be performed. The second hydraulic device 200 is a large-scale hydraulically operated handling device that lowers the D2O tank 10 to a position where the D2O tank 10 can be connected to the crane, for example, to the ground. FIGS. 8a and 8b illustrate a state in which the D2O tank 10 is lowered by the second hydraulic device 200 after the rail 300 has been detached.

After the descending step (S7) is completed, the removing step (S8) of taking the D2O tank 10 out of the containment building 1 by using a crane is performed. Specifically, after the D2O tank 10 has been lowered to the ground, it is connected to the crane and then removed from the containment building 1 through the hatch and air-lock.

The present disclosure is not limited to the above-described specific embodiments and descriptions, and various modifications may be made by those skilled in the art without departing from the gist of the present disclosure claimed in the claims. Such variations are within the protection scope of the present disclosure.

### REFERENCE NUMERALS

1: containment building
10: D2O tank
12: support
20: concrete structure
30: wire saw device
100: first hydraulic device
200: second hydraulic device
220: plate
222: groove
240: hydraulic portion
300: rail

## Claims

1. A method for dismantling a D2O tank of a heavy water reactor installed on an inner wall of a containment building and surrounded by a concrete structure, comprising:
an opening step of cutting a portion of the concrete structure surrounding the D2O tank to create an opening;
a cutting step of cutting the D2O tank through the opening;
a lifting step of lifting the D2O tank by using a first hydraulic device;
a transferring step of transferring the first hydraulic device, while lifting the D2O tank, toward a second hydraulic device; and
a descending step of lowering the first hydraulic device, while lifting the D2O tank, by using the second hydraulic device.

2. The method for dismantling a D2O tank of a heavy water reactor of claim 1, further comprising:
a removing step of taking the D2O tank out of a containment building by using a crane after the descending step.

3. The method for dismantling a D2O tank of a heavy water reactor of claim 1,
wherein in the opening step, a scaffold and a cutting apparatus are installed around the D2O tank and the portion of the concrete structure is cut perpendicularly by using the cutting apparatus.

4. The method for dismantling a D2O tank of a heavy water reactor of claim 1,
wherein in the cutting step, a support of the D2O tank connected to the concrete structure is cut.

5. The method for dismantling a D2O tank of a heavy water reactor of claim 1,
wherein in the lifting step, the D2O tank is lifted by at least 50mm by using the first hydraulic device.

6. The method for dismantling a D2O tank of a heavy water reactor of claim 1,
wherein in the transferring step, the first hydraulic device lifting the D2O tank is transferred along a rail to a position above the second hydraulic device.

7. The method for dismantling a D2O tank of a heavy water reactor of claim 6, further comprising:
an installing step, performed before the cutting step, of installing the second hydraulic device, the rail, and the first hydraulic device.

8. The method for dismantling a D2O tank of a heavy water reactor of claim 7,
wherein in the installing step, the second hydraulic device is installed, the rail is installed to connect the concrete structure and the second hydraulic device to each other, and then, the first hydraulic device is installed on the rail.

9. The method for dismantling a D2O tank of a heavy water reactor of claim 6, further comprising:
a detaching step of detaching the rail after the transferring step,
wherein the descending step is performed after the detaching step.

10. A dismantling apparatus for dismantling a D2O tank of a heavy water reactor installed on an inner wall of a containment building and surrounded by a concrete structure, comprising:
a first hydraulic device configured to lift the D2O tank;
a second hydraulic device spaced apart from the D2O tank and configured to lower the D2O tank; and
a transfer device configured to transfer the first hydraulic device, while lifting the D2O tank, toward the second hydraulic device,
wherein the dismantling apparatus is installed in a state in which a portion of the concrete structure surrounding the D2O tank has been cut and open.

11. The dismantling apparatus for dismantling a D2O tank of claim 10,
wherein the transfer device comprises a rail configured to connect the concrete structure and the second hydraulic device to each other.

12. The dismantling apparatus for dismantling a D2O tank of claim 11,
wherein the first hydraulic device comprises a driving device configured to move the first hydraulic device along the rail.

13. The dismantling apparatus for dismantling a D2O tank of claim 11,
wherein the rail is detachably installed.

14. The dismantling apparatus for dismantling a D2O tank of claim 13,
wherein the rail is detached after the first hydraulic device, while lifting the D2O tank, is transferred to a position above the second hydraulic device, and the second hydraulic device lowers the first hydraulic device together with the D2O tank.

15. The dismantling apparatus for dismantling a D2O tank of claim 13,
wherein the rail is installed in a groove formed in the plate of the second hydraulic device.
